# EUROPÄISCHE PATENTANMELDUNG

(11) **EP 0 754 730 A2**
(43) Veröffentlichungstag der Anmeldung: **22.01.1997**
(21) Anmeldenummer: 96110640.8
(22) Anmeldetag: 02.07.1996
(51) Int. Cl.: C08L 77/00, C08K 3/22

(54) **Flammwidrige thermoplastische Polyamid-Formmassen**

(30) Priorität: 15.07.1995 DE 19525873
(71) Anmelder: Buna Sow Leuna Olefinverbund GmbH, 06258 Schkopau (DE)
(72) Erfinder: Gerecke, Jochen, Dr., 06122 Halle (DE); Giesau, Konrad, Dr., 06118 Halle (DE); Frank, Sven, 06217 Merseburg (DE); Gruber, Klaus, 06128 Halle (DE); Wulff, Dirk, Dr., 06126 Halle (DE)

(57) **Zusammenfassung**

Flammwidrige thermoplastische Formmasse, enthaltend
A) 24,5 bis 65 Masse-% eines thermoplastischen Polyamids,
B) 34,5 bis 75 Masse-% plättchenförmiges, vorzugsweise oberflächenmodifiziertes Magnesiumhydroxid mit einer spezifischen Oberfläche zwischen 1 und 25 m²/g, insbesondere zwischen 3 und 18 m²/g,
C) 0,5 bis 41 Masse-% eines mittels radikalischer Festphasenpfropfpolymerisation von freie und/oder latente Carboxylgruppen enthaltenden Monomeren oder Monomergemischen auf ein olefinisches Rückgrathomo- und/oder Rückgratco- bzw. -blockcopolymerisat erhaltenen funktionalisierten Olefinpolymers mit Gelgehalten zwischen 10 und 90 %
sowie darüber hinaus
D) 0 bis 30,5 Masse-% eines nicht funktionalisierten Olefinpolymerisates und
E) 0 bis 10 Masse-% einer oxidischen und/oder sulfidischen Metallverbindung.

## Beschreibung

Die Erfindung betrifft neue flammwidrige, mittels halogen- und phosphorfreier Flammschutzmittel ausgerüstete thermoplastische Polyamid-Formmassen sowie der daraus, im allgemeinen durch Extrusion- und Spritzgußverarbeitung hergestellten Formteile und Formkörper.

Die Flammschutzausrüstung von thermoplastischen Polyamiden (PA) sowie aus PA und anderen Thermoplasten oder Elastomeren, insbesondere solchen auf Basis von Olefinhomo- und Olefin(block-)copolymeren (PO), bestehenden Polymerblends, einschließlich der unter Verwendung von Füllstoffen/Verstärkungsmaterialien erhaltenen Polymerverbunde, ist eine bekannte und häufig angewandte Methode zur Erweiterung des Einsatzes solcher Formmassen, vor allem in den Bereichen der Elektrotechnik und Elektronik sowie zunehmend im Kraftfahrzeugsektor.

Bekanntermaßen wird die Flammwidrigkeit von Polyamiden analog der anderer Thermoplaste durch Zusatz von halogenierten, zumeist bromierten Verbindungen (.....Kunststoffe 79 (1989) 12, 1391), oder durch Phosphorverbindungen bzw. elementarem roten Phosphor erreicht (EP-A 0 416 435, EP-A 0 205 662, EP-A 0 303 031, EP-A 0 438 188, DE-OS 4 100 740).

Trotz der breiten Palette an handelsüblichen halogen- und phosphorhaltigen Flammschutzmitteln, oft in Kombination mit Antimonoxid oder einer anderen anorganischen Metallverbindung als Synergist, wird vermehrt die Verwendung halogen- und phosphortreier flammhemmender Substanzen gefordert, um im möglichen Havarie- und Brandfall die Freisetzung toxischer und gegebenenfalls leichtflüchtiger korrosiver Sekundärverbindungen auszuschließen.
Als Alternative bieten sich zwar niedermolekulare stickstoffhaltige Verbindungen, insbesondere Triazinverbindungen (DE-OS 2 740 092), oder auch, besonders für Blends aus PA und Polyphenylenether (PPE) oder einem anderen hochtemperaturbeständigen Hochleistungskunststoff (JP 06 145 531), Eisenoxide bzw. Eisenoxid/Zinkborat-Kombinationen an (US 5 071 894), jedoch engen diese Zusatzstoffe die thermoplastischen Verarbeitungsmöglichkeiten stark ein und gewährleisten außerdem keinen optimalen Flammschutz.

Eine recht günstige Flammschutzausrüstung für Thermoplaste basiert auf der Verwendung von Aluminiumhydroxid und besonders Magnesiumhydroxid, letzteres vor allem wegen seiner erst oberhalb 340 °C beginnenden Wasserabspaltung.
Dabei wird das Magnesiumhydroxid oft, wie für anorganische Füllstoffe üblich, unter Verwendung von Organosilanen, -titanaten, Fettsäuren oder besonders Metallsalzen höherer Fettsäuren in oberflächenbeschichteter (gecoateter) Form eingesetzt (EP-A 0 052 868, EP-A 0 352 699, EP-A 0 426 196, EP-A 0 532 122, US 4 098 762, US 4 255 303).
Aber auch unbeschichtetes Magnesiumhydroxid ist verwendbar, insbesondere wenn die PA-Formmassen eine funktionalisierte PO-Komponente, die die Einarbeitung des Magnesiumhydroxids in die Polymermatrix erleichtert, enthält (DE-PS 3 810 519).

Bekannt sind flammwidrige PA/PO-Zusammensetzungen mit einem Mindestanteil an funktionalisierten PO (JP 06 290 637), vorzugsweise maleinisiertem Polypropylen (PP) oder maleinisierten Ethylen/Propylen-Copolymeren (EPM), und mit 40 bis 70 Masse-% Magnesiumhydroxid, die nach Underwriters Laboratories Inc. UL 94-Standard mindestens die Klasse V-2 und zumeist die Klasse V-0 (EP-A 0 532 122) oder bei Verwendung gegenüber dem Magnesiumhydroxid synergistisch wirkenden Verstärkungsfasermaterialien generell die Bewertungsstufe V-0 erfüllen. (DE-PS 3 810 519).
Die obengenannte hohe Füllstoffkonzentration bei Verwendung von Magnesiumhydroxid als Flammschutzmittel ist für eine hohe Flammwidrigkeit eine notwendige Voraussetzung, auch wenn dadurch andererseits eine Reihe wichtiger Eigenschaften, insbesondere die Schlag- bzw. Kerbschlagzähigkeit, trotz versuchter Gegensteuerung durch Einarbeitung von elastifizierenden verträglichen Komponenten, wie funktionalisierten, insbesondere maleinisierten Olefinpolymeren oder Elastomeren, abgesenkt wird.
Andererseits ist mit deutlich geringeren Magnesiumhydroxid-Konzentrationen (EP-A 0 418 068) zwar ein höheres Zähigkeitsniveau, aber keine Flammschutzausrüstung erreichbar.

Der Nachteil der bekannten flammwidrigen und im allgemeinen einen hohen Elastizitäts-Modul aufweisenden PA/PO/Mg(OH)₂-Formmassen besteht aufgrund ihrer spezifischen Zusammensetzung in ihren gegenüber PA oder vergleichbaren PA/PO-Compounds geringen Schlag- und Kerbschlagzähigkeiten, wodurch die Verarbeitungsbreite und anwendungstechnischen Einsatzgebiete erheblich eingeschränkt sind.

Der vorliegenden Erfindung liegt daher die Aufgabe zugrunde - unter Verwendung von Mg(OH)₂ als Flammschutzmittel - halogen- und phosphorfreie flammwidrige Polyamid-Formmassen mit einer größeren Verarbeitungs- und Anwendungsbreite, insbesondere einer verbesserten (Kerb-)Schlagzähigkeit unter Sicherung eines insgesamt ausgewogenen mechanischen Eigenschaftsniveaus, die entsprechend UL 94-Brandtest mindestens der Stufe V-1 und im allgemeinen V-O (1,6 mm-Dicke) genügen, zu entwickeln.

Erfindungsgemäß bestehen die flammwidrigen thermoplastischen Polyamid-Formmassen aus
A) 24,5 bis 65 Masse-% eines thermoplastischen Polyamids,
B) 34,5 bis 75 Masse-% plättchenförmigem Magnesiumhydroxid mit einer spezifischen Oberfläche zwischen 1 und 25 m²/g,
C) 0,5 bis 41 Masse-% eines mittels radikalischer Festphasenpfropfpolymerisation von α,β-ethylenisch ungesättigten, freie und/oder latente Carboxylgruppen besitzenden Verbindungen auf ein aus überwiegend Ethylen- und/oder Propyleneinheiten aufgebautes Homo- und/oder Copolymerisat und/oder ein aus mindestens 50 Masse-% Polyolefinblöcken auf Basis von Ethylen-/C₃- bis C₈-α-Olefinsegmenten bestehendes Blockcopolymerisat erhaltenen funktionalisierten Olefinpolymers mit Gelgehalten zwischen 10 und 90 % sowie darüber hinaus
D) 0 bis 30,5 Masse-% eines nicht funktionalisierten Olefinpolymerisates und
E) 0 bis 10 Masse-% einer oxidischen und/oder sulfidischen Metallverbindung.

Bevorzugte Formmassen dieser Art sind den Unteransprüchen zu entnehmen.

Als Komponente A) für die erfindungsgemäßen Formmassen eignen sich besonders die linearen und partiell aromatischen teilkristallinen sowie amorphen thermoplastisch verarbeitbaren Polyamide mit einer relativen Viskosität von 2 bis 5, vorzugsweise von 2,2 bis 4,5 (gemessen in einer einprozentigen Lösung in Kresol oder in 96-prozentiger H₂SO₄ bei 23 °C), entsprechend gewichtsmittleren Molmassen Mw zwischen 5.000 und 80.000, vorzugsweise zwischen 15.000 und 60.000.

Neben den wichtigsten verwendbaren teilkristallinen linearen Polyamiden, insbesondere Polycaprolactam (PA6) und Polyhexamethylenadipinamid (PA66), des weiteren Polyundecanolactam (PA11), Polylaurinlactam (PA12), Polyhexamethylenazelainamid (PA69), Polyhexamethylensebacinamid (PA 610) und nicht zuletzt Polytetramethylenadipinamid (PA46), können auch Mischungen dieser PA oder Copolyamide, bevorzugt solche, die sowohl Einheiten von ε-Caprolactam als auch Einheiten von Adipinsäure und Hexamethylendiamin (PA 66/6), gegebenenfalls als Dicarbonsäure zumindest teilweise eine aromatische Säure wie Terephthal- und/oder Isophthalsäure enthalten (PA 6/6T, PA 66/6T, PA 66/6I, PA 66/6/6T u.a.), eingesetzt werden.

Auch die durch Umsetzung von Isophthalsäure bzw. Isophthalsäure-Terephthalsäure-Mischungen mit Hexamethylendiamin erhaltenen amorphen PA, wie Poly(hexamethylen-isophthalamid) (PA 6I) und das entsprechende Polycokondensat (PA 6IT), sind ebenso wie die durch Umsetzung von aliphatischen Dicarbonsäuren, insbesondere Adipinsäure, mit äquimolaren Mengen an aromatischen Diaminen, insbesondere m-Xylylendiamin, erhaltenen teilkristallinen partiell aromatischen Polyamide (Polyarylamide), wie z.B. Poly(m-Xylylenadipinamid) (PA XMD6), als erfindungsgemäß flammwidrig auszurüstende Polymere bzw. Bestandteil entsprechender thermoplastischer Formmassen verwendbar.
Besonders bevorzugte Polyamide sind PA6 und PA66 und Copolyamide PA 66/6.

Als Komponente B) können bekannte Flammschutzmittel auf Basis mineralischer, gegebenenfalls oberflächenbehandelter (gecoateter) Magnesiumhydroxide eingesetzt werden. Hierunter sind auch mineralische Compounds bzw. Mischverbindungen, die Mg(OH)₂ in deutlichem Überschuß und entsprechend Aluminiumhydroxid sowie gegebenenfalls Magnesium- und/oder Aluminiumcarbonate und/oder -silikate und andere Mg- bzw. Al-Salze im Unterschuß enthalten, zu verstehen.
Bevorzugt werden aus dem kommerziellen Angebot plättchenförmige Magnesiumhydroxide mit Kristallgrößen in 〈101〉 Richtung größer 800 Å (GB 1 514 081, US 4 098 762, EP-A 0 352 699) und Korngrößen zwischen 0,1 und 10 µm, insbesondere zwischen 0,5 und 3 µm, und einer spezifischen Oberfläche von vorzugsweise zwischen 3 und 18 m²/g (Messung nach BET), im allgemeinen behandelt mit den für Füllstoffe üblichen Oberflächenmodifizierungsmitteln, wie kolloiddispersen Kieselsäurelösungen, Metalloxidhydrosolen, Organotitanaten, -zirkonaten bzw. -zirkoaluminaten und besonders Organosilanen (EP-A 0 352 699), Stearinsäure und anderen Fettsäuren bzw. ihren Derivaten, zumeist in Form ihrer Alkalisalze (DE-OS 2 659 933), sowie ferner Alkylbenzolsulfonaten und Alkalioleaten (EP-A 0 052 868) und anderen.

Eine wesentliche Bedeutung für die Steuerung des Eigenschaftsniveaus der erfindungsgemäßen Formmasse, insbesondere des Zähigkeits-Festigkeits-SteifigkeitsVerhältnisses unter Sicherung generell hoher (Kerb-)Schlagzähigkeiten, hat die Wahl der spezifischen chemischen Zusammensetzung/Struktur sowie des in weiten Grenzen von 0,5 bis 41 Masse-% wählbaren Formmassenanteils Komponente C).
Diese vorteilhafte Variationsmöglichkeit ist zurückzuführen sowohl auf die innerhalb des separaten Feststoffphasenpfropfprozesses verschiedenen einsetzbaren olefinischen Rückgratpolymerisate als auch ihrer sehr unterschiedlich einstellbaren Funktionalisierungsgrade.
Unter Berücksichtigung von Mindestanteilen an Komponente A) vorzugsweise ≧ 28 Masse-% PA sowie B) vorzugsweise ≧ 44,5 Masse-% Mg(OH)₂ zwecks Sicherung der UL 94-Klassifizierung von mindestens V-1 sind auf die gesamte Formmasse bezogene Konzentrationen an Komponente C) von 2 bis 27 Masse-% und besonders bevorzugt 5 bis 15 Masse-% zu wählen.

Die erfindungsgemäß geeigneten funktionalisierten, insbesondere carboxylierten Olefinpolymeren mit einem Vernetzungsgrad entsprechend Gelgehalten (bestimmt als prozentualer Löserückstand in siedendem Xylol) zwischen 10 und 90 %, vorzugsweise zwischen 20 und 70 %, werden durch radikalische Festphasenpfropfpolymerisation von carboxylgruppenhaltigen Monomeren, insbesondere Acryl- und Methacrylsäure, Fumarsäure und deren höheren Homologe, einschließlich ihren Anhydriden, im Temperaturbereich zwischen 40 und 100 °C auf Olefinpolymerrückgrate erhalten.

Als olefinische Rückgratpolymerisate kann die breite Palette an bekannten olefinischen Homo-, Co- und Blockcopolymeren (PO) eingesetzt werden.
Die wichtigsten verwendbaren Homo-PO sind:
Polyethylene mit niedriger Dichte (0,890 - 0,932 g/cm³), erhalten nach dem Hochdruckverfahren (PE-LD);
lineare Polyethylene niederer Dichte (0,915 - 0,935 g/cm³) mittels Niederdruckpolymerisation (PE-LLD);
Polyethylene hoher Dichte (0,940 - 0,980 g/cm³) mittels unterschiedlicher Niederdruck- bzw. Mitteldruckpolymerisationsverfahren (PE-HD);
isotaktische Polypropylene (iPP), einschließlich die durch Einpolymerisieren geringerer Anteile an höheren Olefinen erhaltenen Random- oder Blockcopolymeren, bevorzugt hergestellt mittels Suspensions(Slurry)-, Gasphasenverfahren oder einer Kombination aus Masse(Bulk)- und Gasphasenpolymerisation, wobei neben den Standardprodukten auch solche, verwendet werden können, die den technischen Kunststoffen in wichtigen Eigenschaften entsprechen und unter der Bezeichnung 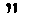 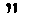 PP based Advanced Materials" (PPAM) bekannt sind (... Kunststoffe 83 (1993) 10, S. 732 - 737);
weitere olefinische Homopolymere, wie Polybuten-1 (PB), Polyisobutylen (PIB) und C₅- bis C₁₂-Polyolefine.

Die wichtigsten möglichen Olefincopolymer-Rückgrate sind:

Unpolare Co- und Terpolymere auf Basis der Polymerisation von Ethylen/Propylen-Gemischen, im allgemeinen in einem molaren Verhältnis von 40 bis 90 / 60 bis 10 sowie gegebenenfalls unter Zusatz eines nichtkonjugierten Diens (Dicyclopentadien, 5-Ethyliden-2-norbornen u.a.), wie besonders die elastomeren peroxid-vernetzbaren Ethylen/Propylen-Copolymeren (EPM) und die schwefelvernetzbaren Ethylen/Propylen/Dien-Terpolymeren (EPDM), einschließlich EP(D)M/PO(PE und/oder PP)-Compounds (W. Hofmann, Kunststoffe 80(1990)10, S. 1204 - 1209;
ebenda 84(1994) 2, S. 109- 111).

Mit der Metallocen-Technologie können als geeignete Festphasen-Rückgratpolymere besonders Olefincopolymere aus Ethylen und/oder Propylen und höheren α-Olefinen, vorzugsweise Octen-1, dessen anteilige Menge im Reaktor über die Zahl der C₆-Seitenketten entscheidet, erhalten werden.
Das betrifft vor allem die aus überwiegend Ethylen und bis maximal 20 % Octen erhaltenen und unter der Bezeichnung Polyolefin-Plastomere (POPs) bekannt gewordenen Copolymeren sowie die entsprechenden 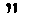 weicheren" mit > 20 % einpolymerisiertem Octen erhaltenen und als Polyolefin-Elastomere (POEs) bezeichneten Copolymeren, weiterhin die analog herstellbaren cycloaliphatischen Olefinhomo- und besonders -copolymeren, Styrol/Ethylen-Copolymerisate mit hohem Styrolanteil und hohem Molekulargewicht sowie auch die syndiotaktischen Polypropylene (SPP) (J. Wolters, Kunststoffe 83(1993)12, S. 985 - 987).

Zu einer weiteren Gruppe möglicher olefinischer Copolymerrückgrate gehören - im Unterschied zu den obengenannten amorphen POPs und POEs - die auf dem Markt befindlichen teilkristallinen thermoplastischen, aus kristallinen (harten) PO-Blöcken (zumeist PE-Blöcken mit Schmelztemperaturen von etwa 95 bis 110 °C) und amorphen (weichen) PO-Blöcken mit Glasumwandlungstemperaturen zwischen -40 und -60 °C bestehenden Blockcopolymeren.

Zu einer weiteren wichtigen Festphasen-Rückgratpolymergruppe gehören die durch selektive Hydrierung (GB 1 030 306, US 3 700 633) von Styrol/Butadien/Styrol-(SBS) bzw. Styrol/Isopren/Styrol-Dreiblockcopolymeren (SIS), deren Dien-Mittelblöcke einen Vinylgruppengehalt zwischen 10 und 80 %, vorzugsweise zwischen 25 und 65 %, aufweisen, erhaltenen Styrol/Ethylen-Butylen/Styrol-(SEBS) bzw. Styrol/Ethylen-Propylen/Styrol-Dreiblockcopolymeren (SEPS) mit gewichtsmittleren Molekulargewichten Mw zwischen 20.000 und 800.000 und einem Gesamtpolystyrolanteil von vorzugsweise zwischen 5 und 40 Masse-%.

Aufgrund des thermodynamisch unvertraglichen Phasenverhaltens zwischen den harten schmelzbaren Polystyrolblöcken und den weichen elastischen Polydien- bzw. Polyolefinblöcken stellen besonders die genannten Dreiblockcopolymeren und gegebenenfalls die analogen aus vier und mehr Blöcken bestehenden Copolymeren typische thermoplastische Elastomere (TPE), wegen ihres Polystyrolgehaltes auch als TPE-S codiert, dar.

Zur Gruppe der TPE-S, die auch in Form von Rückgratpolymercompounds eingesetzt werden können, zählen auch SEBS/PO- bzw. SEPS/PO-Blends, wobei als PO-Komponente vorzugsweise PP, PE-LD, PE-LLD, PE-HD, EPM, EVAC, POP und POE gut geeignet sind und die Compounds gegebenenfalls zusätzlich einen Füllstoffanteil zwecks Einstellung bestimmter Härten und spezifischer anderer Eigenschaften enthalten können.

Außer den unpolaren olefinischen Copolymeren und Blockcopolymeren sind vor allem die aus Olefineinheiten sowie Vinylester - und/oder (Meth-)Acrylsäureestereinheiten zusammengesetzten polaren olefinischen Copolymerisate als besonders vorteilhafte Festphasen - Rückgratpolymere einsetzbar.

Bevorzugt geeignet sind Ethylen/Vinylacetat(VAC)-Copolymere (EVAC) mit VAC-Gehalten von etwa 3 bis 50 Masse-%, insbesondere von 4 bis 30 Masse-% (E. Rohde, Kautsch. + Gum. - Kunststoffe 45(1992)12, S. 1044 - 1051).

Weiterhin sind die entsprechend EVAC zusammengesetzten Ethylen/Acrylat-Kautschuke (AEM), z.B. Ethylen/Ethylacrylat- (EEA), Ethylen/n-Butylacrylat- (EBA) sowie Ethylen/(Methyl-)Methacrylat-Copolymere (EMA), verwendbar.

Als weitere mögliche Formmassenkomponente D) können nicht funktionalisierte Olefinhomo- und Olefin(block-)copolymere, insbesondere die zur Herstellung der funktionalisierten Olefinpolymeren (Komponente C)) zuvor genannten Rückgratpolymerisate, vorzugsweise Polyethylene (PE) und Ethylencopolymere bzw. Ethylencopolymer-Compounds, wie besonders EVAC und EPM bzw. EPM/PE und/oder PP-Compounds, mit einem Formmassenanteil bis maximal 30,5 Masse-%, vorzugsweise von 0,5 bis 20 und insbesondere von 4 bis 10 Masse-%, eingesetzt werden.

Als Komponente E) kann in den erfindungsgemäßen Formmassen ein anorganisches Metalloxid und/oder -sulfid, insbesondere das als Flammschutzmittel-Synergist bekannte Antimontrioxid sowie ferner auch Eisenoxid, Zinksulfid u.a., mit einem auf die Formmasse bezogenen Anteil bis maximal 10, vorzugsweise von 1 bis 5,5 Masse%, verwendet werden.

Außer den genannten Komponenten A) bis E) kann die erfindungsgemäße Polyamid-Formmasse weitere Funktionszusatz- sowie Verarbeitungshilfsstoffe, insbesondere Antioxidantien, Wärme-, Licht- und UV-Stabilisatoren, Farbstoffe bzw. Pigmente, Gleit- und Entformungsmittel, jeweils in den üblichen auf die gesamte Formmasse bezogenen Konzentrationen zwischen 0,05 und 10 Masse-%, enthalten.

Von dem obengenannten wesentlichen Formmassenbestandteil C) haben sich entsprechend der vorliegenden Erfindung als wirksamste funktionalisierte Olefinpolymerisate die in einer separaten Vertahrensstufe in einem trockenen pulverigen bis körnigen (granularen) Polymerfestbett durch Pfropfen carboxylgruppenhaltiger Monomerer, vorzugsweise Acrylsäure (AS) und/oder Methacrylsäure (MAS) bzw. Mischungen aus AS und/oder MAS mit einem unpolaren Comonomeren, wie besonders Styrol (S) und/oder α-Methylstyrol (αMS), mit insgesamt 0,5 bis 10 Masse-%, vorzugsweise 1 bis 5 Masse-%, aufgepfropfter AS und/oder MAS erhaltenen funktionalisierten, aus überwiegend Olefineinheiten bestehenden Ethylenco- und -blockcopolymeren erwiesen.

Das betrifft insbesondere nachfolgende, unter Verwendung organischer peroxidischer und/oder diazogruppenhaltiger Initiatoren erhaltene Festphasenpfropfprodukte
EVAC-g-AS bzw. EVAC-g-(AS-co-S)
EVAC-g-MAS bzw. EVAC-g-(MAS-co-αMS)
SEPS-g-AS bzw. SEPS-g-(AS-co-S)
SEBS-g-AS bzw. SEBS-g-(AS-co-S)
EPM-g-AS bzw. EPM-g-(AS-co-S)
einschließlich die mittels Rückgratpolymercompounds, wie z.B. SEBS/EVAC, SEPS/PE und/oder PP (EPM) u.a., erhaltenen Pfropfpolymerprodukte (DE-OS 4 342 605).

Die Erfindung wird nachfolgend detaillierter - unter Angabe der Formmassenbestandteile und Compoundierbedingungen - beschrieben, ohne mit den konkret angegebenen Zusammensetzungen die gesamte Breite möglicher erfindungsgemäßer Compounds vollständig zu erfassen.

### Ausführungsbeispiel

Für die Herstellung der erfindungsgemäßen Formmassen wurden verwendet:

### Komponente A)

- Poly-ε-caprolactam (PA6), mit einem K-Wert nach FIKENTSCHER von 71, entsprechend einer relativen Viskosität ηᵣₑₗ von 2,6 (in 96 %iger Schwefelsäure als einprozentige Lösung bei 23 °C, nach DIN 53727);
- Polyhexamethylenadipinamid (PA 66) mit einem K-Wert nach FIKENTSCHER von 75, entsprechend ηᵣₑₗ von 2,85.

### Komponente D)

- • PE-HD: mit einer Dichte von 0,952 g/cm³ und einem gewichtsmittleren Molekulargewicht M_{w} von 147000, Granulat;
- • iPP: mit einer Dichte von 0,912 g/cm³ und einem Mw von 159000, Flocken;
- • EVAC: mit einem einpolymerisierten Vinylacetat(VAC)-Anteil von 14,2 Masse%, einer Dichte von 0,932 g/cm³ und einem Mw von 140000, Pulver;
- • EPM/PP/PE: der Zusammensetzung 63 % EPM (67 Masse-% Ethylen-/33 Masse% Propyleneinheiten, Mw = 138000), 27 % PP (Mw = 159000) und 10 % PE-HD (Mw = 147000), Granulat.

### Komponente C)

- carboxyliertes EVAC, hergestellt durch Festphasenpfropfpolymerisation von 6 Masseteilen Methacrylsäure (MAS) auf 100 Masseteile vorgenanntes EVAC unter Erhalt eines Copfropfproduktes mit 5,1 Ma-% aufgepfropfter MAS (PMAS) und einem Gelgehalt von 48 % (carb. EVAC-III);
- carboxyliertes EVAC, hergestellt durch Festphasenpfropfpolymerisation von 5 Masseteilen AS und 4 Masseteilen Styrol auf 100 Masseteile vorgenanntes EVAC unter Erhalt eines Copfropfproduktes mit 4,4 Ma-% aufgepfropfter AS (PAS) und einem Gelgehalt von 26 % (carb. EVAC-I);
- carboxyliertes EVAC, hergestellt durch Festphasenpfropfpolymerisation von 2,5 Masseteilen AS auf vorgenanntes EVAC unter Erhalt eines Pfropfproduktes mit 2,3 Ma-% PAS und einem Gelgehalt von 68 % (carb. EVAC-II);
- carboxyliertes SEPS, hergestellt durch Festphasenpfropfpolymerisation von 5 Masseteilen AS auf 100 Masseteile Styrol/Ethylen(45 %)-Propylen(42 %)/Styrol-Dreiblockcopolymerisat (PS-Anteil 13 Ma-%, Mw: 80000) unter Erhalt eines Copfropfproduktes mit 4,0 Masse-% PAS und einem Gelgehalt von 43 % (carb. SEPS).

Für Vergleichs-Formmassen, analog den erfindungsgemäßen Beispielen zusammengesetzt, compoundiert und ausgeprüft an spritzgegossenen Prüfkörpern, wurden nachfolgende funktionalisierte PO (Vgl. Komp. C) verwendet:
- carb. PP*
   hergestellt durch Schmelzepfropfung von 6,5 Masseteilen AS auf 100 Masseteile vorgenanntes iPP im Doppelschneckenextruder (0,1 Ma-% Di-tert.-butylperoxid als Initiator, mittlere Massetemperatur T_{M} = 210 °C), Gelgehalt 7 %;
- carb. EVAC*
   Schmelzepfropfprodukt: 2 Masseteile Maleinsäureanhydrid (MSA) auf 100 Masseteile vorgenanntes EVAC im Doppelschneckenextruder (T_{M} = 205 °C), Gelgehalt 1 %;
- carb. EPM*
   Schmelzepfropfprodukt: 2 Masseteile MSA auf 100 Masseteile EPM (67 % Ethylen-/33 % Propyleneinheiten, M_{W} = 138000) im Doppelschneckenextruder (T_{M} = 200 °C), Gelgehalt 3 %;
- carb SEBS*
   Schmelzepfropfprodukt: 2 Masseteile MSA auf 100 Masseteile Styrol/Ethylen (38 %)-Butylen(33 %)/Styrol-Dreiblockcopolymerisat (PS-Anteil = 29 Ma-%, M_{W} = 52000) im Doppelschneckenextruder (T_{M} = 240 °C), Gelgehalt 1 %.

### Komponente B)

3 verschiedene oberflächenmodifizierte Magnesiumhydroxide mit folgenden Kennwerten

| **Bezeichnung** | **mittlerer Teilchendurchmesser (µm)** | **Dichte (g/cm**^{**3**}**)** | **Spezifische Oberfläche (BET) (m**^{**2**}**/g)** |
|---|---|---|---|
| Mg(OH)₂-I | 2,2 | 2,39 | 11,0 (1 % Aminosilan) |
| Mg(OH)₂-II | 1,1 | 2,26 | 15,0 (7 % ethoxyl.Fettsäuresalz) |
| Mg(OH)₂-III | 0,8 | 2,36 | 5,5 (0,8 % Fettsäuresalz) |

### Komponente E)

Antimontrioxid Sb₂O₃

### Weitere Zusatz- und Verarbeitungshilfsstoffe

Antioxidantien/Stabilisatoren und Gleitmittel

Zum Vergleich wurde darüber hinaus ein mit einem konventionellen halogenhaltigen Flammschutzsystem (Dekabromdiphenylether/Sb₂O₃, s. Vgl.-Nr. 1) ausgerüsteter PA6/carboxyliertes EVAC-Compound sowie ein mittels einer Kombination aus rotem Phosphor(P)/Mg(OH)₂ (in reduzierter Menge, s. Vgl.-Nr. 2) flammwidrig eingestellter PA 66/EVAC-Compound hergestellt und ausgeprüft.
Als weiteres Vergleichsbeispiel diente ein PA6/Mg(OH)₂-Compound ohne funktionalisierten PO-Anteil (Vgl.-Nr. 3).

Die Komponenten wurden auf einem Zweischneckenextruder (Durchmesser D = 43 mm, Länge = 38 D) mit einer Schneckengeschwindigkeit von 200 min⁻¹ sowie einem Temperaturprofil und einem Durchsatz, welche eine Massetemperatur von (240 ± 10) °C gewährleisten, compoundiert und in ein Wasserbad extrudiert.

Nach Granulierung und Trocknung wurden auf einer Spritzgußmaschine Prüfkörper (ISO-Stäbe, Schulterstäbe, Platten) gespritzt und geprüft.
In Tabelle 1 sind die Zusammensetzungen der untersuchten erfindungsgemäßen und Vergleichs-Formmassen und in Tabelle 2 die Ergebnisse der Messungen aufgeführt.
Nachfolgende Kennwerte entsprechend den mitangegebenen Prüfvorschriften wurden ermittelt:

| | |
|---|---|
| Streckspannung (Zuggeschwindigkeit : 50 mm/min) | σₛ nach DIN 53455 |
| Reißdehnung (Zuggeschwindigkeit: 50 mm/min) | ε_{R} nach DIN 53455 |
| Zug-Elastizitätsmodul (Zuggeschwindigkeit: 1 mm/min) | E_{Z} nach DIN 53457 |
| Biege-Elastizitätsmodul | E_{b} nach DIN 53457/ISO 178 |
| 3,5 %-Biegespannung/Biegefestigkeit | σ_{b-3,5}/σ_{b} nach DIN 53452/ISO 178 |
| Kugeldruckhärte | H 358/30 nach DIN 53456 |
| CHARPY-Schlägzähigkeit (23 °C, -30 °C) | aₙ nach ISO 179 |
| CHARPY-Kerbschlagzähigkeit (23 °C, -30 °C) | aₖ nach ISO 179 |
| VICAT-Erweichungstemperatur (Medium: Luft) | VST/B 50 nach DIN ISO 306 |
| Brandverhalten an 1,6 mm- bzw. 3,2 mm-Platten (vertikal) | nach UL 94 |
| Glühdrahtprüfung (1 mm-Platte) | nach VDE 0471-2-1 |
| Oberflächenbeschaffenheit (Aussehen) der Prüfkörper | verbal eingeschätzt (s. Tabelle 2) |

Anhand der in Tabelle 2 aufgeführten Kennwerte, insbesondere der Gegenüberstellung mit den Vergleichs-Formmassen unter Verwendung bekannter, mittels üblicher Schmelzepfropfung erhaltener funktionalisierter Olefinpolymerer (s. Vgl.-Nr.4 bis Vgl.-Nr. 7), hebt sich vor allem das für die erfindungsgemäßen Formmassen überraschend hohe Kerbschlagniveau ab. Einem Vergleich mit einer konventionell halogenhaltig flammgeschützten PA6-Formmasse (Vgl.-Nr. 1) halten die erfindungsgemäßen Formmassen stand, die sich generell sowohl durch eine hohe Flammwidrigkeit als auch ein sehr ausgewogenes hohes mechanisches Eigenschaftsniveau auszeichnen.
Die erreichten Steifigkeits-, Festigkeits- und Härte-Kennwerte sowie Wärmeformbeständigkeiten gestatten den vorgesehenen Einsatz insbesondere im Elektrobereich sowie zunehmend im Automobilsektor. Mit der sprunghaften Zähigkeitsverbesserung sind Verarbeitungs- und Anwendungsgebiete deutlich erweitert.

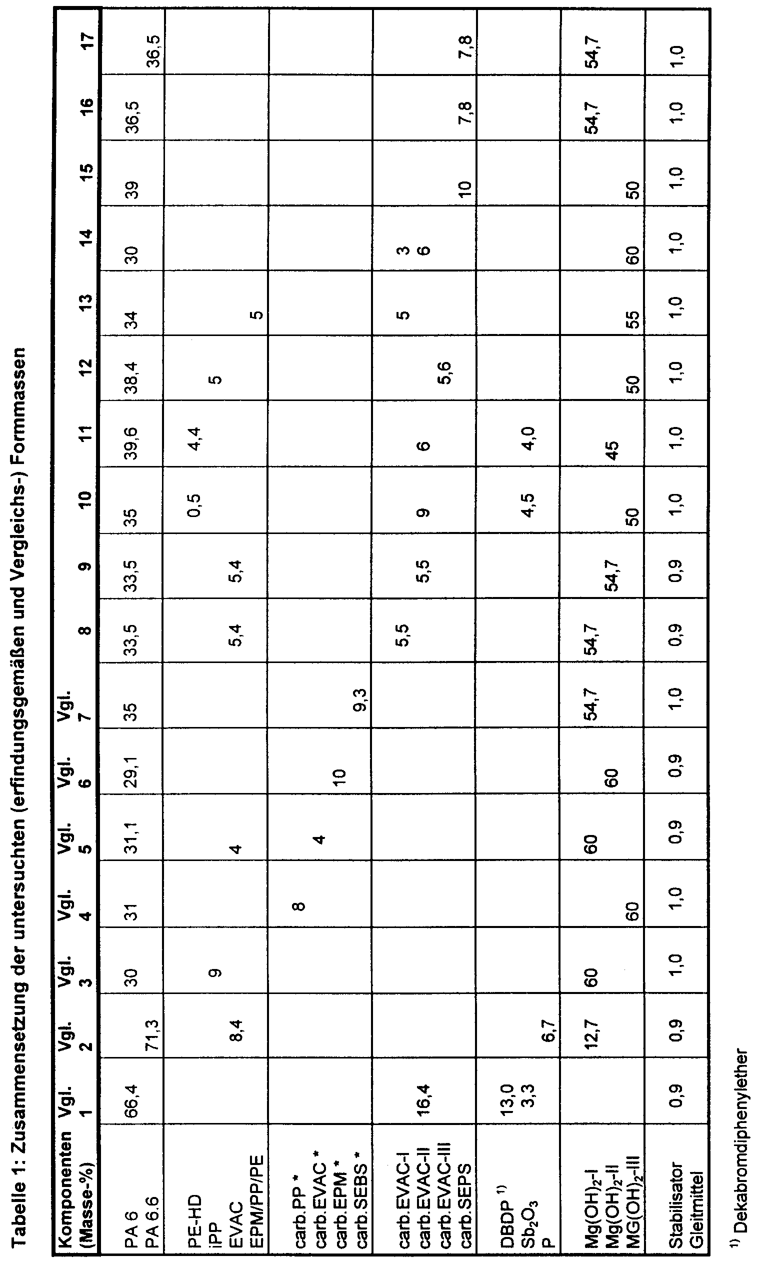

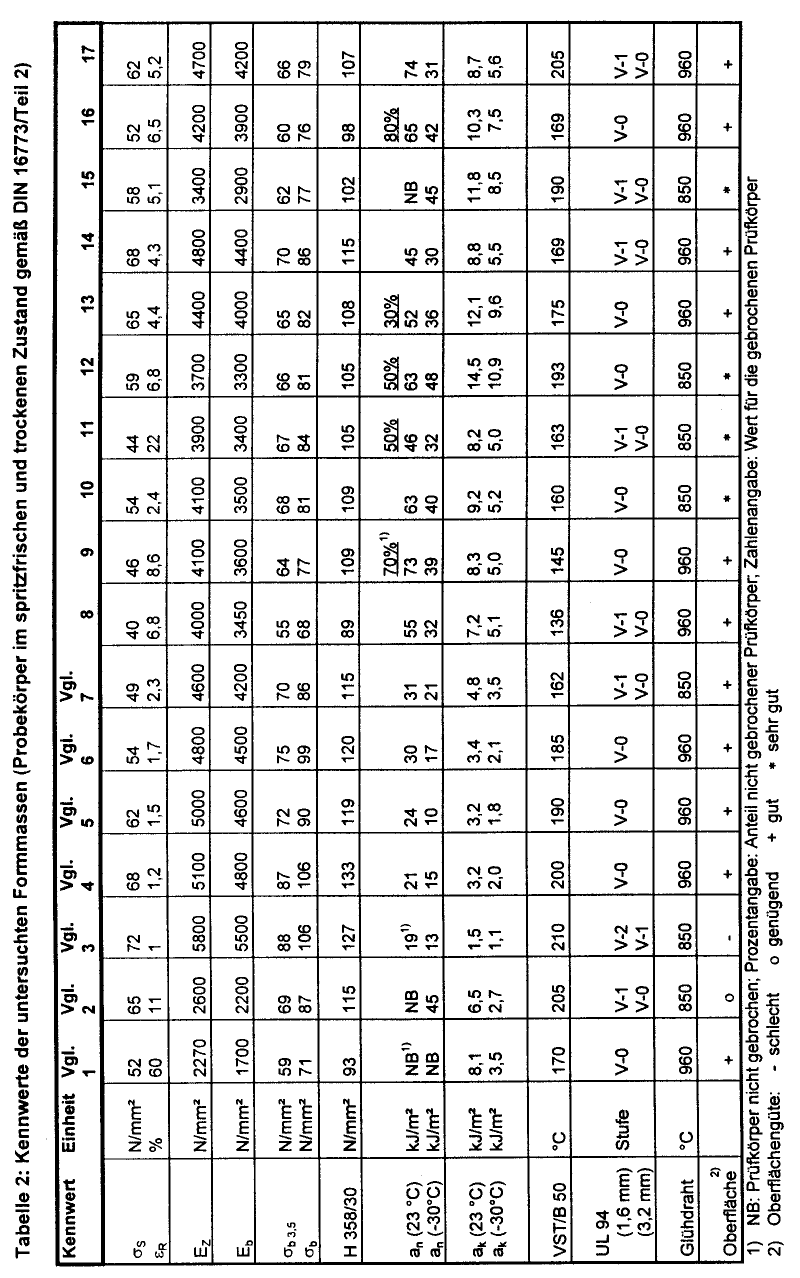

## Patentansprüche

1. Flammwidrige thermoplastische Polyamid-Formmassen, enthaltend als Komponenten
A) 24,5 bis 65 Masse-% eines thermoplastischen Polyamids,
B) 34,5 bis 75 Masse-% plättchenförmiges Magnesiumhydroxid mit einer spezifischen Oberfläche zwischen 1 und 25 m²/g,
C) 0,5 bis 41 Masse-% eines mittels radikalischer Festphasenpfropfpolymerisation von α, β-ethylenisch ungesättigten, freie und/oder latente Carboxylgruppen besitzenden Verbindungen auf ein aus überwiegend Ethylen- und/oder Propyleneinheiten aufgebautes Homo- und/oder Copolymerisat und/oder ein aus mindestens 50 Masse-% Polyolefinblöcken auf Basis von Ethylen-/C₃- bis C₈-α-Olefinsegmenten bestehendes Blockcopolymerisat erhaltenen funktionalisierten Olefinpolymers mit Gelgehalten zwischen 10 und 90 %
sowie darüber hinaus
D) 0 bis 30,5 Masse-% eines nicht funktionalisierten Olefinpolymerisates und
E) 0 bis 10 Masse-% einer oxidischen und/oder sulfidischen Metallverbindung.

2. Flammwidrige thermoplastische Polyamid-Formmassen nach Anspruch 1, enthaltend
28 bis 53 Masse-% der Komponente A),
44,5 bis 69,5 Masse-% der Komponente B),
2 bis 27 Masse-% der Komponente C)
0,5 bis 20 Masse-% der Komponente D) und
0 bis 5,5 Masse-% der Komponente E).

3. Flammwidrige thermoplastische Polyamid-Formmassen nach den Ansprüchen 1 und 2, enthaltend als Komponente A) Polyamid 6 und/oder Polyamid 6.6 und/oder ein Copolyamid 6/6.6.

4. Flammwidrige thermoplastische Polyamid-Formmassen nach den Ansprüchen 1 bis 3, enthaltend 5 bis 15 Masse-% der Komponente C).

5. Flammwidrige thermoplastische Polyamid-Formmassen nach den Ansprüchen 1 bis 4, enthaltend als Komponente C) ein funktionalisiertes Festphasenpfropfprodukt, welches durch radikalische Pfropfpolymerisation von Acrylsäure und/oder Methacrylsäure oder deren Mischungen mit Styrol und/oder α-Methylstyrol in einem Masseverhältnis Säuremonomer(e) zu Styrolmonomer(e) von 9 zu 1 bis 1 zu 1 auf ein olefinisches Rückgratpolymerisat erhalten worden ist.

6. Flammwidrige thermoplastische Polyamid-Formmassen nach den Ansprüchen 1 bis 5 enthaltend als Komponente C) ein carboxyliertes Festphasenpfropfprodukt auf Basis von Olefincopolymer-Rückgraten mit einem einpolymerisierten Anteil an Vinylestereinheiten oder (Meth-)Acrylsäureestereinheiten von 4 bis 30 Masse-% und/oder Ethylen/Propylen- oder Ethylen/Butylen-Mehrblockcopolymer-Rückgraten mit einem Polystyrolsegmentanteil von 5 bis 40 Masse-%, einschließlich aus diesen polaren Olefincopolymeren und/oder unpolaren Olefinblockcopolymeren und Polyethylenen und/oder Polypropylenen und/oder Ethylen/Propylen(Dien)und/oder Ethylen(Propylen)/C₄- bis C₁₂-α-Olefin-Copolymerisaten zusammengesetzten Compounds.

7. Flammwidrige thermoplastische Polyamid-Formmassen nach den Ansprüchen 1 bis 6, enthaltend als Komponente C) ein carboxyliertes Festphasenpfropfprodukt aus einem Ethylen/Vinylacetat-Copolymerisat (EVAC) und/oder Ethylen/Ethylacrylat-Copolymerisat (EEA) und/oder Ethylen/n-Butylacrylat-Copolymerisat (EBA) und/oder Styrol/Ethylen-Butylen/Styrol-Blockcopolymerisat (SEBS) und/oder Styrol/Ethylen-Propylen/Styrol-Blockcopolymerisat (SEPS) als Rückgratpolymere mit 0,5 bis 10 Masse-%, vorzugsweise 1,0 bis 5,0 Masse-%, aufgepfropfter Acrylsäure und/oder Methacrylsäure.

8. Flammwidrige thermoplastische Formmassen nach den Ansprüchen 1 bis 7, enthaltend als Komponente B) plättchenförmiges Magnesiumhydroxid mit einem mittleren Teilchendurchmesser zwischen 0,1 und 10 µm und einer spezifischen Oberfläche zwischen 3 und 18 m²/g.

9. Flammwidrige thermoplastische Formmasse nach den Ansprüchen 1 bis 8, enthaltend ein unter Verwendung von für Füllstoffe bekannten Oberflächenbeschichtungssubstanzen modifiziertes Magnesiumhydroxid.

10. Flammwidrige thermoplastische Formmassen nach den Ansprüchen 1 bis 9, enthaltend als Komponente D) ein nicht funktionalisiertes Polyethylen und/oder Polypropylen und/oder ein aus überwiegend Ethylen- und/oder Propyleneinheiten bestehendes nicht funktionalisiertes Co- und/oder Blockcopolymer mit einem auf die gesamte Formmasse bezogenen Anteil von 4 bis 10 Masse-%.

11. Flammwidrige thermoplastische Formmassen nach einem oder mehreren der Ansprüche 1 bis 10, enthaltend als Komponente E) 1 bis 5,5 Masse-% Antimontrioxid.
